# EUROPÄISCHE PATENTSCHRIFT

(11) **EP 0 743 203 B1**
(45) Veröffentlichungstag und Bekanntmachung des Hinweises auf die Patenterteilung: **04.08.1999**
(21) Anmeldenummer: 96107653.6
(22) Anmeldetag: 14.05.1996
(51) Int. Cl.: B60C 29/06, F04B 33/00

(54) **Adaptervorrichtung**
Adapter device
Dispositif adaptateur

(30) Priorität: 15.05.1995 DE 19518244
(43) Veröffentlichungstag der Anmeldung: 20.11.1996
(73) Patentinhaber: innovative technik marketing (itm), 41844 Wegberg-Merbeck (DE)
(72) Erfinder: Thanscheidt, Günter, D-40721 Hilden (DE)
(74) Vertreter: Ackmann, Günther

(56) Entgegenhaltungen:
- DE-C- 592 636
- DE-U- 9 413 154
- FR-A- 437 650

## Beschreibung

Die Erfindung betrifft eine Adaptervorrichtung zur Verbindung eines Pumpensystems mit unterschiedlichen Ventilanschlüssen, mit einem Gehäuse, welches eine Eintrittsöffnung für das zu pumpende Medium und mehrere Austrittsöffnungen aufweist, wobei die Austrittsöffnungen wahlweise und einzeln mit der Eintrittsöffnung verbindbar sind und durch ein Dichtungselement gegenüber der Eintrittsöffnung abgedichtet sind.

Pumpensysteme der vorgenannten Art werden für unterschiedliche Anwendungsfälle sowohl in der Industrie sowie im privaten Bereich benötigt, das bekannteste Pumpensystem ist beispielsweise eine Luftpumpe zum Aufblasen von Luftkissen, Schlauchbooten, Fahrrad- oder Autoreifen, wobei es sich um eine manuelle oder motorisch angetriebene Luftpumpe handeln kann. In der Regel besitzen die vorgenannten Druckluftsysteme einen unterschiedlichen Ventilanschluß, beispielsweise wird für Autoreifen ein Schrader-Ventil und für Fahrräder ein Sclaverand-Ventil eingesetzt. Aufgrund der unterschiedlichen Ausführungen der Ventile ist es nicht möglich diese über einen einzigen Druckluftanschluß mit Druckluft zu beaufschlagen. Vielmehr ist für jeden speziellen Ventiltyp ein entsprechendes Pumpensystem mit dem hierzu korrespondierenden Ventilanschluß notwendig. Die Anschaffung mehrerer unterschiedlicher Pumpensysteme ist einerseits recht kostenintensiv und führt andererseits bei einer Vertauschung des Pumpensystems eventuell zu einer Beschädigung der Ventilanschlüsse, wenn der falsche Ventilanschluß verwendet wird. Beschädigungen an der Ventildichtung des Pumpensystems selbst sind ebenfalls nicht auszuschließen.

Um die Vielzahl der notwendigen Pumpensysteme zu verringern wurde beispielsweise eine kombinierte Rad- und Autoreifen-Luftpumpe vorgeschlagen, welche zwei Anschlußmöglichkeiten aufweist. Am Kopfende der Luftpumpe befinden sich zwei diametral gegenüberliegende Anschlüsse, einmal für ein Schrader-Ventil und einmal für ein Sclaverand-Ventil. Die Abdichtung des nicht benötigten Anschlusses erfolgt durch eine Kugeldichtung. Die Kugel befindet sich in einer Bohrung, welche quer zur Längsachse der Pumpe angeordnet ist und an ihrem jeweiligen Ende einen der beiden Anschlüsse aufweist. Durch die Schwerkraft fällt die Kugel jeweils auf die unten liegende Dichtlippe und wird durch den Luftdruck abdichtend angepreßt. Die Funktion der Luftpumpe ist aber nur dann gewährleistet, wenn die Bohrung der Kugel annähernd vertikal ausgerichtet ist. Bei horizontaler Anordnung der Bohrung, d.h. beispielsweise bei einem waagerecht angeordneten Ventil ist die Lage der Kugel nicht genau definiert bzw. wird durch die Schwerkraft nicht in eine abdichtende Position bewegt, so daß kein Andruck an eine Dichtung und somit keine Abdichtung der zweiten Austrittsöffnung erfolgt. Durch die Ausführung der Luftpumpe mit einer Kugeldichtung ist ferner nur die Verwendung maximal zweier Ventilanschlüsse möglich.

Der Erfindung liegt daher die Aufgabe zugrunde, eine Adaptervorrichtung zu schaffen, welche die Verwendung möglichst vieler Ventilanschlüsse an einem einzigen Pumpensystem ermöglicht und die vorgenannten Nachteile vermeidet.

Erfindungsgemäß ist zur Lösung der Aufgabe vorgesehen, daß das Dichtungselement dreh- und/oder schiebebeweglich innerhalb des Gehäuses gelagert ist und durch eine äußere ringförmige Hülse, welche das Gehäuse zumindestens teilweise umschließt, bewegbar ist.

Durch die Verwendung eines Dichtungselementes, welches dreh- und/oder schiebebeweglich gelagert ist, besteht die Möglichkeit, mehrere Anschlüsse über den Umfang des Gehäuses verteilt, anzuordnen. Durch die Verdrehbarkeit des Dichtungselementes können somit die jeweils nicht benötigten Ventilanschlüsse abgedichtet und ein bestimmter Ventilanschluß ausgewählt und mit dem Pumpensystem verbunden werden. Durch die Schiebebeweglichkeit besteht zudem die Möglichkeit, in einer zweiten oder sogar dritten Ebene weitere Ventilanschlüsse vorzusehen. Das innerhalb des Gehäuses gelagerte Dichtungselement wird zweckmäßigerweise durch eine ringförmige Hülse, welche das Gehäuse zumindestens teilweise umschließt, um einen sicheren Halt zu gewährleisten und eine zusätzliche Abdichtung zu ermöglichen, verschoben oder verdreht. Ein weiterer Vorteil dieser Adaptervorrichtung besteht darin, daß die Funktionsfähigkeit des Pumpensystems in jeder beliebigen Lage gewährleistet ist und durch die Vielzahl der Anschlußmöglichkeiten eine nicht unerhebliche Kosteneinsparung eintritt, weil für die diversen Druckluftsysteme nur ein einziges Pumpensystem benötigt wird.

In einer ersten vorteilhaften Ausgestaltung der Erfindung ist vorgesehen, daß das Gehäuse an einem Ende offen gestaltet ist und die Hülse auf das Ende des Gehäuses aufschiebbar ist und diese verschließt. Die Hülse bildet in diesem Fall das Kopfende des Gehäuses der Adaptervorrichtung bzw. der Pumpeneinheit und ermöglicht zu dem eine schnelle und einfache Montage.

In weiterer Ausgestaltung der Erfindung ist vorgesehen, daß die Austrittsöffnung umfangsverteilt und/oder in Längsrichtung des Gehäuses angeordnet sind, wodurch die Anzahl der Austrittsöffnungen bzw. Anschlußmöglichkeiten beliebig erweiterbar ist.

In weiterer Ausgestaltung der Erfindung ist vorgesehen, daß die Hülse koaxial zum Gehäuse über den einzelnen Austrittsöffnungen angeordnet ist und durch einen Durchbruch maximal eine der Austrittsöffnungen freigibt oder alle verschließt. Je nach Drehstellung der Hülse wird nur eine der Austrittsöffnungen des Gehäuses freigegeben und führt zusammen mit einer entsprechenden Beschriftung des Anschlusses zu keiner Verwechselung der verschiedenen Ventilanschlüsse. Desweiteren wird die Dichtigkeit und Stabilität des Pumpensystems durch die koaxial angeordnete Hülse erhöht.

Eine optimale Abdichtung der nicht verwendeten Austrittsöffnungen wird dadurch gewährleistet, daß das Dichtungselement ringförmig ausgebildet ist und ein Segmentausschnitt aufweist, welcher sich in Axialrichtung über einen Teilbereich des Dichtungselementes erstreckt und einen inneren Verbindungskanal zur Eintrittsöffnung des Gehäuses aufweist. Durch den Segmentausschnitt wird nur jeweils die Austrittsöffnung mit der Pumpeneinheit verbunden, welche unmittelbar über dem Segmentausschnitt liegt, während die übrigen Austrittsöffnungen durch das Dichtungselement gleichzeitig verschlossen werden. Des weiteren ist durch diese Anordnung eine Reduzierung der Bauhöhe des Adapterelementes möglich, weil ein längerer Schaft einzelner Ventilanschlüsse durch den Segmentausschnitt hindurch in das Gehäuse der Adaptervorrichtung eingeführt werden kann.

Um das Dichtungselement mit der äußeren Hülse zu verbinden bzw. eine dreh- und/oder schiebebewegliche Mitnahme des Dichtungselementes zu gewährleisten, ist vorgesehen, daß das Dichtungselement zumindestens teilweise doppelwandig ausgebildet ist und eine Tasche bildet, in die ein Segmentringansatz der Hülse zur Mitnahme eingreift.

Um die Einführung des Ventilanschlusses in die Adaptervorrichtung und die Verbindung zum Pumpensystem sicherzustellen, ist es notwendig, daß der Durchbruch der Hülse und der Segmentausschnitt des Dichtungselementes nach der Montage deckungsgleich angeordnet sind, so daß bei einer Verdrehung der Hülse der Segmentausschnitt gleichzeitig mit verdreht wird.

In einer weiteren Ausführung der Erfindung ist vorgesehen, daß die Hülse oder das Gehäuse in der Stirnfläche einen Gewinde- oder Steckanschluß mit einem nach innen geführten Verbindungskanal aufweist, welcher durch eine Abdichtung verschließbar ist. Der Gewinde- oder Steckanschluß in der Stirnfläche ermöglicht die Anordnung einer weiteren Austrittsöffnung bzw. Anschlußmöglichkeit an die Adaptervorrichtung. Beispielsweise kann ein Schlauchanschluß mit einem korrespondierenden Gewinde- oder Steckanschluß in die Stirnfläche eingeschraubt bzw. eingedrückt werden, so daß das Pumpensystem mit weiteren Ventilanschlüssen ausgestattet werden kann, die sich am zweiten Ende des Schlauches befinden. Hierzu ist es notwendig, daß die Hülse alle übrigen ringförmig angeordneten Austrittsöffnungen verschließt und das durch den eingeführten Gewinde- oder Steckanschluß die Abdichtung der Anschlußbohrung in der Stirnfläche gleichzeitig geöffnet wird.

Um eine Reduzierung der Dichtungselemente auf eine einzige innere Dichtung zur Abdichtung der Bohrung in der Stirnfläche sowie der einzelnen Austrittsöffnungen zu ermöglichen, ist vorgesehen, daß das Dichtungselement einen ringförmigen Kragen an einem Ende und eine zurück gesetzte und teilweise ringförmig durchbrochene Stirnfläche aufweist, wobei auf der Stirnfläche eine elastische Verdickung zur Abdichtung der Anschlußbohrung angeordnet ist. Durch den eingeführten Gewinde- oder Steckanschluß wird diese elastische Verdickung nach innen gedrückt, so daß eine Verbindung zum Pumpensystem hergestellt wird.

Zur besseren Handhabung des Pumpensystems mit einem aufgesetzten Adapter und zur besseren Anwahl der verschiedenen Anschlußmöglichkeiten, ist vorgesehen, daß das Gehäuse und die Hülse mit einer Rastung aus einer Nut-Feder-Kombination ausgestattet ist, welche immer dann zum Eingriff kommt, wenn der Durchbruch der Hülse eine Austrittsöffnung freigibt.

In weiterer Ausgestaltung der Erfindung ist vorgesehen, daß die Austrittsöffnungen des Gehäuses aus einem Verbindungskanal und einer runden oder eckigen Ausnehmung bestehen, welche zur Aufnahme einer an das jeweilige Dichtungssystem angepaßten Dichtung vorgesehen sind. Hierdurch besteht nach einer Abnahme der Hülse die Möglichkeit, defekte oder undicht gewordene Abdichtungen auszutauschen und die Lebensdauer der Pumpeneinheit zu erhöhen.

Zur Arretierung der Adaptervorrichtung ist vorgesehen, daß in einer Raststellung anstelle einer Austrittsöffnung ein Druckknopf zur Verriegelung der Hülse verwendet wird.

Um eine Verdrehung bzw. eine Verschiebbarkeit der Hülse zu gewährleisten, ist vorgesehen, daß das Gehäuse mindestens eine axiale Längsnut und/oder eine Ringnut zur Führung aufweist, in welcher mindestens ein Ansatz der Hülse eingreift und geführt ist. Durch die Verwendung einer Ringnut des Gehäuses wird die Drehbarkeit der Hülse gewährleistet, während durch eine axiale Längsnut die Verschiebbarkeit gegeben ist.

Eine Kombination von einer axialen und einer ringförmigen Führungsnut ermöglicht in einer bestimmten Drehstellung, welche beispielsweise durch die Position des Verriegelungs-Druckknopfes gegeben ist, ein Abziehen der Hülse.

In weiterer Ausgestaltung der Erfindung ist ferner vorgesehen, daß der Gewinde- oder Steckanschluß zur Aufnahme eines Schlauchanschlusses oder eines Manometers vorgesehen ist. Der Anschluß eines beispielsweise fest aufgesetzten Manometers auf die Adaptervorrichtung ermöglicht die Messung des Luftdruckes eines Druckluftsystems, welches über einen der übrigen Austrittsöffnungen mit dem Pumpensystem verbunden ist. Durch den Einsatz eines Schlauchanschlusses wird die Variationsmöglichkeit hinsichtlich der Anschlüsse beliebig erhöht und es können auch schwer zugängliche Ventilanschlüsse erreicht werden.

In weiterer Ausgestaltung der Erfindung ist vorgesehen, daß eine der Ausnehmungen zur Aufnahme eines Adapters, beispielsweise eines Ball- oder Schlauchadapters vorgesehen ist, welcher mit einem Steckanschluß oder mehreren Befestigungsnasen in eine Ringnut der Ausnehmungen clipartig zur Befestigung einrastet und durch einen O-Ring gegenüber dem Gehäuse abgedichtet ist.

Die Verwendung eines Schlauchadapters ist dann erforderlich, wenn die Ventilanschlüsse schwer oder gar nicht zugänglich für den direkten Anschluß an die Adaptervorrichtung sind, wie beispielsweise bei Rollstühlen, Sackkarren, Auto- oder Motorradreifen. Aus diesem Grund ist vorgesehen, daß der Schlauchadapter am anderen Ende des Schlauches einen Doppelventilanschluß aufweist, welcher durch einen verdrehbaren Regelschalter mit einem Dichtungselement drehfest verbunden ist und die Ventilanschlüsse abdichtet bzw. einzeln öffnet, wobei der Regelschalter von außen verdrehbar angeordnet ist.

In weiterer Ausgestaltung ist vorgesehen, daß der Regelschalter außen einen Drehkopf und innen ein zylindrisches Teilsegment mit einer hinteren Stirnfläche aufweist, wobei sich das zylindrische Teilsegment über einen Dreiviertelkreis erstreckt und einen nach innen hervorstehenden Zapfen des Schlauchanschlusses aufnimmt, so daß der Regelschalter gegen ein Herausfallen gesichert ist, wobei der Regelschalter eine mittlere Stellungen aufweist, in welcher beide Ventilanschlüsse verschlossen sind und zwei weitere Stellungen aufweist, in welcher einer der beiden Ventilanschlüsse mit dem Schlauch über einen Verbindungskanal verbunden ist.

Um eine Sicherung der beiden Ventilanschlüsse zu ermöglichen, sind die Ventilanschlüsse drehbar gelagert und durch ein Befestigungsmittel, welches in eine Nut der Ventilanschlüsse einrastet, gesichert.

Eine besondere Anwendung des Schlauchadapters mit Doppelventilanschluß gilt der Regulierung von Oel-/ Luftfederungssystemen, welche bei der Einstellung und bei der Abnahme des Ventilanschlusses keine Druckverluste erfahren dürfen. Durch die mittlere Stellung des Regelschalters mit einem Verschließen des Verbindungskanales zu den Ventilanschlüssen ist diese Möglichkeit gegeben.

Die Erfindung wird anhand der Figuren im einzelnen näher erläutert.

Es zeigt
- Fig. 1: ein Gehäuseende eines Pumpensystems in einer geschnittenen Seitenansicht und in einem Schnitt I-I,
- Fig. 2: eine Hülse für das Gehäuse gemäß Figur 1 in einer geschnittenen Seitenansicht und in einem Schnitt II-II,
- Fig. 3: ein Dichtungselement zur Abdichtung der verschiedenen Austrittsöffnungen, zwei Gummidichtungen sowie einen Verriegelungsknopf jeweils in einer Draufsicht und in einer Schnittdarstellung,
- Fig. 4: das Gehäuse mit Hülse nach der Montage in einer geschnittenen Seitenansicht,
- Fig. 5: einen Balladapter sowie einen Schlauchadapter in einer geschnittenen Seitenansicht,
- Fig. 6: eine Draufsicht auf einen Schlauchadapter mit Schlauch und einem Doppelventilanschluß und
- Fig. 7: eine geschnittene Draufsicht VIII-VIII und einen weiteren Schnitt IX-IX durch den Doppelventilanschluß.

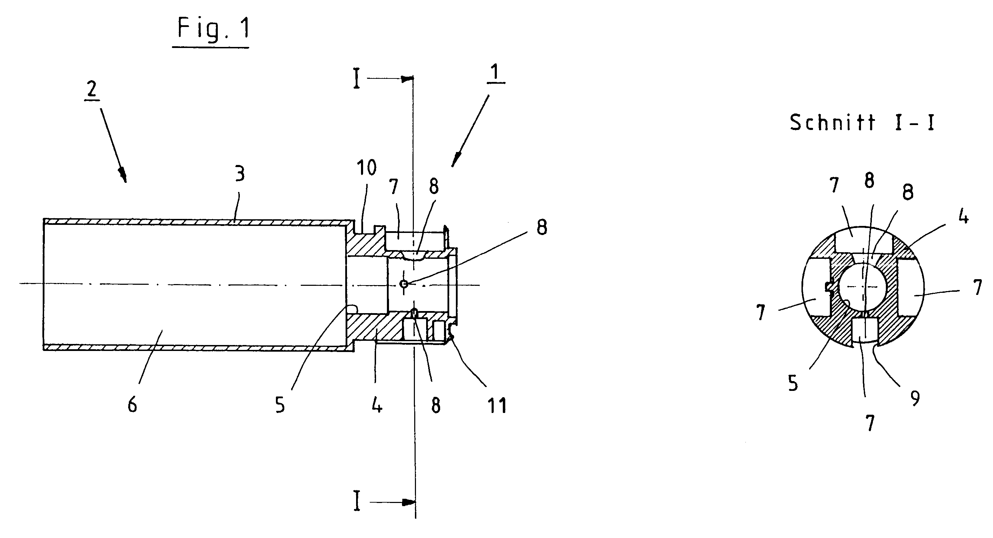

Figur 1 zeigt in einer geschnittenen Seitenansicht und einem Schnitt I-I eine Adaptervorrichtung 1, welche einstückig an ein Pumpensystem 2 angeformt ist. Von dem Pumpensystem 2 ist nur schematisch die ringförmige Außenhülse 3 dargestellt. An die ringförmige Außenhülse 3 ist das Gehäuse 4 der Adaptervorrichtung 1 angeformt, welches im wesentlichen aus einem ringförmigen Ansatz besteht und mehrere Bohrungen bzw. Durchbrüche aufweist. Eine zentrale und axial angeordnete Bohrung 5 ist mit dem Pumpenraum 6 des Pumpensystems 2 verbunden. In dem Gehäuse 4 sind, wie aus dem Schnitt I-I ersichtlich, insgesamt vier Ausnehmungen 7 eingearbeitet, welche jeweils um 90° zueinander versetzt angeordnet sind. Es ist jedoch denkbar, daß eine größere Anzahl von Ausnehmungen 7 auf dem Umfang des Gehäuses 4 verteilt werden. Die oberen Ausnehmungen 7 sind in ihrem hinteren Teil jeweils rechteckförmig ausgebildet, während die untere Ausnehmung 7 rund ausgeführt ist und zur Aufnahme eines Balladapters vorgesehen ist. Drei der Ausnehmungen 7 sind über einen Verbindungskanal 8 mit der zentralen Bohrung 5 verbunden. Die Größe der Ausnehmungen 7 und die des Verbindungskanales 8 ist jeweils an die unterschiedlichen Ventilanschlüsse angepaßt, wobei in jede Ausnehmung 7 bei der Montage eine entsprechende Gummidichtung eingelegt bzw. der Balladapter eingeführt wird. Je nach verwendeten Ventilanschluß besteht der Verbindungskanal 8 aus einer kleinen Bohrung oder einem größeren Durchbruch, der u.a. die Einführung des Ventilschaftes bis zur inneren Bohrung 5 ermöglicht, um die Baugröße zu reduzieren.

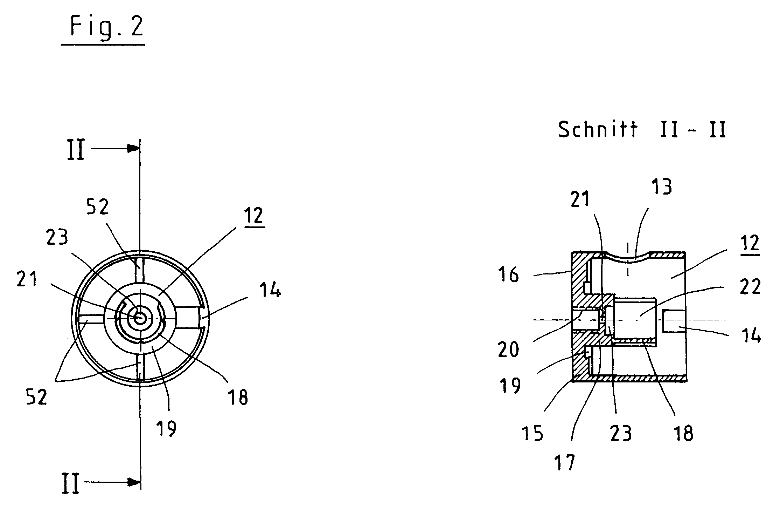

Die vierte Ausnehmung 7 weist dem gegenüber keine Verbindung zur zentralen Bohrung 5 auf und ist zur Aufnahme eines Druckknopf vorgesehen, welcher eine Verriegelung der Adaptervorrichtung 1 , d. h. des Gehäuses 4 und der Hülse, ermöglicht. In der Verriegelungsstellung sind zur Vermeidung von Verschmutzungen bzw. dem Eindringen von Schmutzpartikeln in den Pumpenraum 6 die verschiedenen Austrittsöffnungen durch die in der Figur 2 dargestellte Hülse verschlossen. In das Gehäuse 4 ist eine Längsnut 9 und eine Ringnut 10 eingearbeitet, welche zur Führung eines an der Hülse angeformten Ansatzes vorgesehen ist. Die Hülse kann mit dem Ansatz durch die Längsnut 9 aufgeschoben werden und durch die Ringnut 10 in jede beliebige Stellung verdreht werden, wobei die Stellung durch eine an dem Gehäuse 4 angeformte Nase 11 arretiert werden kann. Die Nase 11 greift in eine sternförmige Nut der Hülse zur Arretierung ein.

Figur 2 zeigt eine Hülse 12 in einer Draufsicht und in einer geschnittenen Seitenansicht, welche koaxial auf das Gehäuse 4 aufgeschoben werden kann. Die Hülse 12 weist einen Durchbruch 13 auf, welcher je nach Drehstellung der Hülse 12 eine der Ausnehmungen 7 freigibt oder eine Einrastung des Verriegelungsknopfes ermöglicht. Auf der Innenseite der Hülse ist ein Ansatz 14 angeformt, welcher in der Längsnut 9 bzw. in der Ringnut 10 des Körpers 4 geführt wird. Der Ansatz 14 verhindert mit Ausnahme einer bestimmten Drehposition, das Abziehen der Hülse 12 von dem Gehäuse 4. Das dem Ansatz 14 abgewandte Ende der Hülse 12 ist durch eine Wand 15 mit einer Stirnfläche 16 verschlossen. Auf der Innenseite der Wand 15 ist ein kreisrunder Ansatz 17 angeformt, der durch einen Segmentringansatz 18 verlängert ist. Der Segmentringansatz 18 erstreckt sich über einen Dreiviertelkreis, dessen Öffnung mit dem Durchbruch 13 der Hülse 12 fluchtet.

Auf dem Segmentringansatz 18 wird das Dichtungselement, welches in der linken Teilfigur 3 dargestellt ist, aufgeschoben und zur Abdichtung der verschiedenen Austrittsöffnungen verwendet. Um den Ansatz 17 herum befindet sich in der Wand 15 eine Nut 19, welche den ringförmigen Kragen des Dichtungselementes aufnimmt. In der Stirnfläche 16 befindet sich eine zentrale Bohrung 20, welche bis in den Ansatz 17 hineinreicht und durch einen kleinen Verbindungskanal 21 mit der Bohrung 22 des Segmentringansatzes 18 verbunden ist. In den Ansatz 17 ist im weiteren eine Ausnehmung 23 eingearbeitet, welche zur Aufnahme einer Dichtung für die Bohrung 20 vorgesehen ist. Die Bohrung 20 wird durch die Dichtung gegenüber dem Pumpenraum 6 abgedichtet und dient zu Aufnahme beispielsweise eines Schlauchadapters oder eines Manometers, welche jeweils ein Innenteil aufweisen, mit dem die Abdichtung nach innen gedrückt und somit eine Verbindung zum Pumpenraum 6 geöffnet wird. Von dem Segmentringansatz 18 ausgehend ist eine sternförmige Nut 52 auf der Innenseite der Wand 15 angeordnet, in welche die Nase 11 des Gehäuses 4 zur Arretierung einrastet.

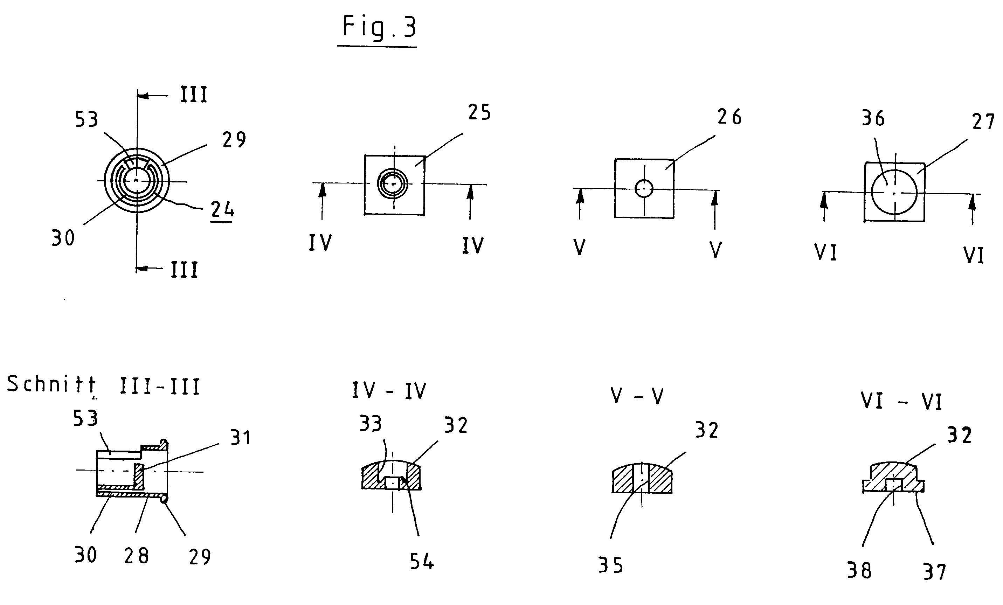

Figur 3 zeigt jeweils in einer Draufsicht und einer geschnittenen Ansicht verschiedene Dichtungselemente, welche aus einem dauerelastischen Material bestehen. Die linke Teilfigur zeigt das Dichtungselement 24 für den Segmentringansatz 18, während die mittleren Teilfiguren zwei Dichtungen 25, 26 für die Ausnehmungen 7 zeigen und die rechte Teilfigur einen Verriegelungs-Druckknopf 27 zeigt.

Das Dichtungselement 24 besteht aus einem Kreisringabschnitt 28 mit einem angeformten abgerundeten Kragen 29 sowie einem ringförmigen Ansatz 30, der doppelwandig ausgeführt ist und sich über den Umfang eines Dreiviertelkreises erstreckt. In dem doppelwandigen Ansatz, der quasi eine Tasche bildet, wird bei der Montage der Segmentringansatz 18 der Hülse 12 eingeschoben. Der doppelwandige Bereich des Ansatzes 30 dient ferner zur Abdichtung der verschiedenen Austrittsöffnungen der Adaptervorrichtung 1, während der offene Segmentausschnitt 53 des Ansatzes 30 eine Verbindung zwischen der jeweiligen Austrittsöffnung und dem Pumpenraum 6 ermöglicht. Der Segmentausschnitt 53 des Ansatzes 30 wurde hierbei so groß gewählt, daß der Schaft eines nicht dargestellten Ventilanschlusses aufgenommen werden kann, um eine möglichst geringe Baugröße der Adaptervorrichtung 1 zu erzielen. Im weiteren weist das Dichtungselement 24 eine zurück gesetzte und teilweise ringförmig durchbrochene Stirnfläche 31 auf, welche dauerelastisch federnd ausgebildet ist und die Bohrung 20 bzw. den Verbindungskanal 21 gegenüber dem Pumpenraum 6 in Ruhelage abdichtet. Bei der Verwendung eines Schlauchadapters, welcher in die Bohrung 20 der Hülse 12 einschraubbar ist, wird die Stirnfläche 31 des Dichtungselementes 24 nach innen gedrückt und öffnet somit den Verbindungskanal 21 gegenüber dem Pumpenraum 6.

In den weiteren Teilfiguren sind die Dichtungen 25,26 abgebildet, welche für die Aussparung 7 des Gehäuses 4 vorgesehen sind und alle eine quadratische Grundform, welche an die Ausnehmung 7 angepaßt ist, aufweisen. Die nach außen zu liegen kommende Fläche der Dichtungen 25,26 weist eine Wölbung 32 auf, welche an den Radius des Gehäuses 4 angepaßt ist. Die Dichtung 25 weist eine abgestufte Bohrung 33 auf, welche zur Aufnahme eines Ventilanschlusses vorgesehen ist. Im Übergangsbereich der abgestuften Bohrung 33 ist eine keilförmige Ringnut 54 eingearbeitet, welche den Ventilrand beim Aufstecken umschließt. Die Dichtung 26 hingegen weist nur eine durchgehende Bohrung 35 auf und dient zur Aufnahme eines herkömmlichen Fahrradventils. Der in der letzten Teilfigur dargestellte Druckknopf 27 besteht aus einer quadratischen Grundfläche mit einem mittigen runden Ansatz 36. Auf der Unterseite 37 befindet sich eine Sacklochbohrung 38, welche zur Aufnahme einer nicht dargestellten Feder vorgesehen ist. Durch die Federkraft wird der Druckknopf 27 durch den Durchbruch 13 der Hülse 12 nach außen gedrückt und ermöglicht eine Arretierung der Hülse 12 auf dem Gehäuse 4, sofern der Durchbruch 13 mit dem Druckknopf 27 fluchtet.

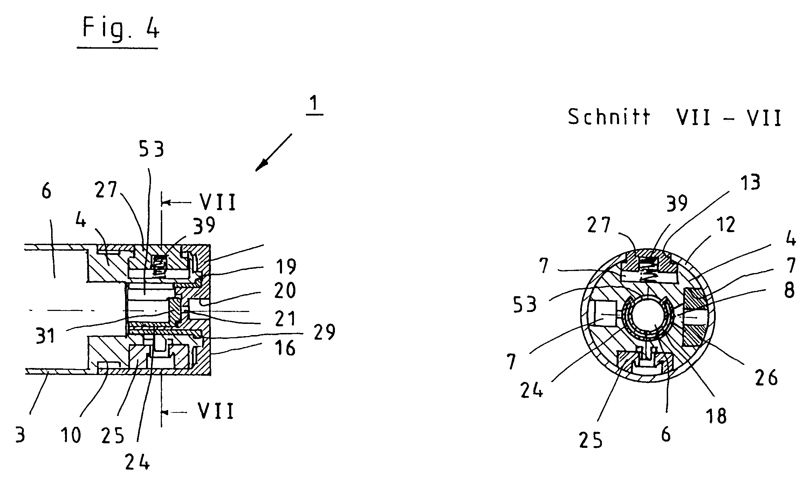

Figur 4 zeigt in einer geschnittenen Seitenansicht und in einem Schnitt VII-VII die Adaptervorrichtung 1 nach der Montage. Aus der Schnittdarstellung ist zu erkennen, daß in den Ausnehmungen 7 des Gehäuses 4 in der oberen Position der Druckknopf 27 mit einer in der Sacklochbohrung 38 liegenden Feder 39 eingesetzt ist, während in der rechten und unteren Ausnehmung 7 eine Dichtung 25 bzw. 26 eingelegt ist. Die linke Ausnehmung 7 ist hingegen frei. In der Drehposition der Hülse 12 ist der Durchbruch 13 nach oben ausgerichtet, so daß der Druckknopf 27 durch den Durchbruch 13 hindurch nach außen gedrückt wird. Die Dichtungen 25, 26 sind durch die Hülse 12 zusätzlich verschlossen, um Verschmutzungen zu vermeiden. Diese Position stellt praktisch die Verriegelungsposition der Adaptervorrichtung 1 dar, in welcher keine der Austrittsöffnungen mit dem Pumpenraum 6 verbunden ist.

Die Abdichtung gegenüber dem Pumpenraum 6 erfolgt durch das Dichtungselement 24, welches auf dem Segmentringansatz 18 der Hülse 12 aufgeschoben ist und mit ihrem offenen Segmentausschnitt 53 in Richtung auf den Druckknopf 27 zeigt. Bei einer Verdrehung der Hülse 12 wird der einstückig mit der Hülse 12 verbundene Segmentringansatz 18 mitgedreht, so daß der Segmentausschnitt 53 des Dichtungselementes 24 in Richtung auf die Austrittsöffnung verdreht wird und gleichzeitig eine Verbindung zum Pumpenraum 6 hergestellt wird. Die in der Stirnfläche 16 vorhandene Bohrung 20 wird durch die Stirnfläche 31 des Dichtungselementes 24 abgedichtet, so daß für alle Austrittsöffnungen des Gehäuses 4 nur ein einziges Dichtungselement erforderlich ist. Alternativ besteht die Möglichkeit die Bohrung 20 durch eine separate Dichtung abzudichten. Das Dichtungselement 24 selbst ist auf den ringförmigen Ansatz 17 der Hülse 12 aufgeschoben und liegt mit seinem Kragen 29 in der ringförmigen Nut 19, so daß der Pumpenraum 6 gegenüber der Hülse 12 ausreichend abgedichtet ist.

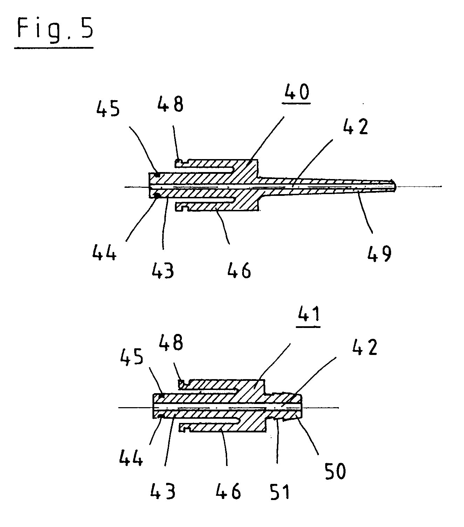

Figur 5 zeigt in der oberen Darstellung einen Ball-Adapter 40 und in der unteren Darstellung einen Schlauchadapter 41 jeweils in einer geschnittenen Seitenansicht. Beide Adapter 40, 41 weisen eine zentrale Bohrung 42 auf, welche als Luftkanal vorgesehen ist. Eine ringförmiges Ansatzstück 43 der Adapter 40, 41 weist eine Nut 44 mit einem O-Ring 45 auf, welcher zur Abdichtung des Adapters 40, 41 gegenüber der Hülse 12 vorgesehen ist. Der Ansatz 43 wird wahlweise in die freie Ausnehmung 7 der Hülse 12 eingeführt oder kann bei der Verwendung mit einem Gewindeanschluß in die Bohrung 20 der Hülse 12 eingeschraubt werden, wobei der verlängerte Ansatz 43 die elastische Stirnfläche 31 des Dichtungselementes 24 nach innen drückt, so daß die Bohrung 42 mit dem Pumpenraum 6 verbunden ist und über die Nut 44 und den O-Ring 45 ebenfalls eine Abdichtung gegenüber der Hülse 12 gewährleistet ist. Zur Befestigung der Adapter 40, 41 in der Ausnehmung 7 ist um den Ansatz 43 ein Kreisringsegment 46 angeordnet, welches gegenüber dem Ansatz 43 zurückgesetzt ist. Das Kreisringsegment 46 ist einstückig an den Adapter 40, 41 angeformt und weist an seinem freien Ende eine Befestigungsnase 48 auf, welche in eine Ringnut der Hülse 12 einrasten kann und eine sichere Befestigung des Adapters 40, 41 in der freien Ausnehmung 7 der Hülse 12 gewährleistet. Das nach außen weisende Ende des Adapters 40 besteht aus einer konisch zulaufenden Ventilnadel 49, welche in den Schlauch eines Balles eingedrückt werden kann, während der Schlauchadapter 41 mit einem kurzen Zapfen 50 versehen ist, der eine abgestufte Riffelung zur Befestigung eines nicht dargestellten Schlauches aufweist. Über den Schlauchadapter besteht die Möglichkeit weitere externe Anschlüsse, beispielsweise für ein Twin-System vorzusehen.

Desweiteren besteht die Möglichkeit, das Gehäuse 4 mit einer größeren Anzahl von Ausnehmungen und Verbindungskanälen auszustatten und die Hülse 12 zusätzlich schiebebeweglich anzuordnen, um die verschiedenen Ventilanschlüsse zu realisieren.

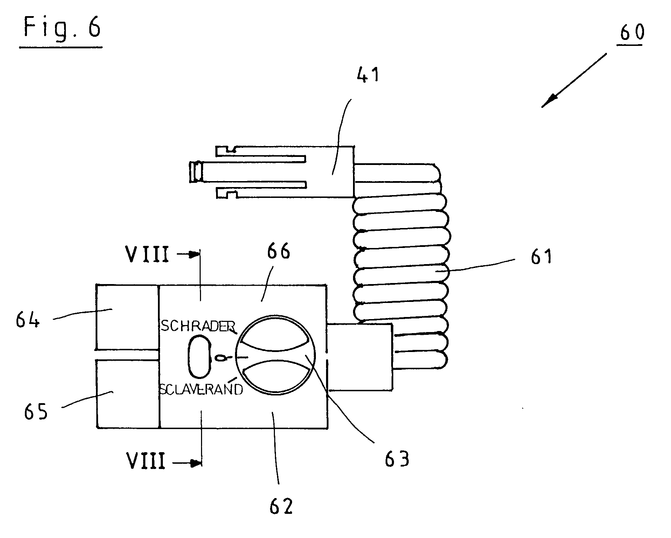

Figur 6 zeigt in einer Draufsicht einen Schlauchanschluß 60, bestehend aus einem Schlauchadapter 41, einem Schlauch 61 und einem Doppelventilanschluß 62. Der Schlauchadapter 41 entspricht im wesentlichen dem der unteren Teilfigur 5, wobei anstelle des Zapfens 50 der Schlauch 61 in den Schlauchadapter 41 eingeführt ist. Der Schlauch ist spiralförmig aufgewickelt und verfügt über eine ausreichende Länge zum Anschluß an schwer zugängliche Ventile. Am anderen Ende des Schlauches 61 befindet sich ein Doppelventilanschluß 62 mit einem Regelschalter 63, welcher drei mögliche Positionen einnehmen kann. In der mittleren Position befindet sich die Nullstellung, in welcher beide Ventilanschlüsse, der Schrader- 64 und der Sclaverandanschluß 65 verschlossen sind. In der oberen Position wird eine innere Verbindung zum Schraderanschluß 64 und in der unteren Position eine Verbindung zum Sclaverandanschluß 65 hergestellt, so daß über den Schlauch 61 und den Schlauchadapter 41 eine Verbindung zur nicht dargestellten Adaptervorrichtung hergestellt werden kann. Die beiden Anschlüsse 64, 65 sind drehbar auf dem Gehäuse 66 des Doppelventilanschlusses 62 gelagert und erleichtern somit das Anschrauben an das jeweilige Ventil.

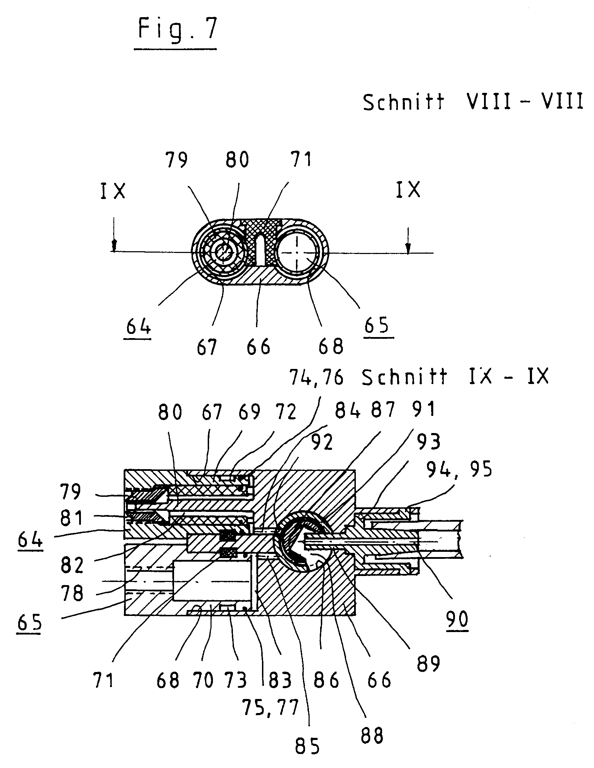

Figur 7 zeigt eine Schnittdarstellung durch das Gehäuse 66 des Doppelventilanschlusses 62 gemäß der Verbindungsline VIII - VIII und eine gemäß der Verbindungslinie IX - IX. Die obere Teilfigur zeigt die beiden Ventilanschlüsse in der geschnittenen Draufsicht, in welcher links der Schraderanschluß 64 und rechts der Sclaverandanschluß 65 erkennbar ist, welche beide drehbar in dem Gehäuse 66 befestigt sind. Das Gehäuse 66 weist zu diesem Zweck zwei Bohrungen 67, 68 auf, in welche die Anschlüsse 64, 65 mit einem reduzierten Ende 69, 70 hineinragen und durch ein Befestigungselement 71 gehalten werden, welches jeweils in eine Nut 72, 73 einrastet.

Eine Abdichtung der Anschlüsse 64, 65 erfolgt jeweils durch einen O-Ring 74, 75, welcher in einer Nut 76, 77 gelagert ist. Der Sclaverandanschluß 65 weist lediglich eine Gewindebohrung 78 zum Aufschrauben auf, während der Schraderanschluß 64 eine Dichtung 79 und einen mittig angeordneten Stift 80 aufweist, welcher gegen die Ventilnadel eines Schraderventiles drückt und dieses öffnet. Um einen Druckverlust beim Aufschrauben zu vermeiden, ist der Stift 80 gegenüber der Dichtung 79 zurückgesetzt angeordnet, so daß zunächst das Schraderventil gegen die Dichtung 79 drückt und von der Dichtung insbesondere auf der Innenseite fest umschlossen wird, bevor der Stift 80 die Ventilnadel betätigt. Die Dichtung 79 weist auf der Außenseite eine Wölbung 81 auf, welche gegen den Ring des Schraderventils angedrückt wird und besonders gut abdichtet. Das hintere Teil der Dichtung 79 ist demgegenüber konisch erweitert, um eine Rückfederung der Dichtung 79 in dem Ventilanschluß zu gewährleisten.

Die Zuführung der Druckluft erfolgt jeweils über einen Verbindungskanal 82, 83, welche durch einen Verlängerungskanal 84, 85 bis zu einer Bohrung 86 geführt sind, in welcher der Regelschalter 63 drehbar gelagert ist. Der Regelschalter weist außen einen Drehkopf und innen ein zylindrisches Teilsegment 87 mit einer hinteren Stirnfläche 88 auf, wobei sich das zylindrische Teilsegment 87 über einen Dreiviertelkreis erstreckt und einen nach innen hervorstehenden Zapfen 89 des Schlauchanschlusses 90 aufnimmt, so daß der Regelschalter 63 im Gehäuse 66 drehbar gelagert ist, aber nicht herausfallen kann. Das Teilsegment 87 und der Zapfen 89 begrenzen gleichzeitig den Drehbereich des Regelschalters 63. Auf der äußeren Fläche des Regelschalters ist eine Dichtung 91 mit einer Bohrung 92 angeordnet, welche drehfest mit dem Regelschalter 63 verbunden ist und bei einer Verdrehung die Bohrung 92 zur Deckung mit einem der beiden Verlängerungskanäle 84, 85 bringt. Der Schlauchanschluß 90 des Gehäuses 66 besteht aus einer Stufenbohrung 93 mit einer Rastung 94, in welche ein Zapfen 95 des Schlauchanschlusses 90 einrastet.

### Bezugszeichenliste

- 1: Adaptervorrichtung
- 2: Pumpensystem
- 3: Außenhülse
- 4: Gehäuse
- 5: Bohrung
- 6: Pumpenraum
- 7: Ausnehmung
- 8: Verbindungskanal
- 9: Längsnut
- 10: Ringnut
- 11: Nase
- 12: Hülse
- 13: Durchbruch
- 14: Ansatz
- 15: Wand
- 16: Stirnfläche
- 17: Ansatz
- 18: Segmentringansatz
- 19: Nut
- 20: Bohrung
- 21: Verbindungskanal
- 22: Bohrung
- 23: Ausnehmung
- 24: Dichtungselement
- 25: Dichtung
- 26: Dichtung
- 27: Druckknopf
- 28: Ringelement
- 29: Kragen
- 30: Ansatz
- 31: Stirnfläche
- 32: Wölbung
- 33: Bohrung
- 34: Ringnut
- 35: Bohrung
- 36: Ansatz
- 37: Unterseite
- 38: Sacklochbohrung
- 39: Feder
- 40: Ball-Adapter
- 41: Schlauch-Adapter
- 42: Bohrung
- 43: Ansatz
- 44: Nut
- 45: O-Ring
- 46: Kreisringsegment
- 48: Befestigungsnase
- 49: Ventilnadel
- 50: Zapfen
- 51: Riffelung
- 52: Nut
- 53: Segmentausschnitt
- 54: Ringnut
- 60: Schlauchanschluß
- 61: Schlauch
- 62: Doppelventilanschluß
- 63: Regelschalter
- 64: Schraderanschluß
- 65: Sclaverandanschluß
- 66: Gehäuse
- 67: Bohrung
- 68: Bohrung
- 69: Ende
- 70: Ende
- 71: Befestigungselement
- 72: Nut
- 73: Nut
- 74: O-Ring
- 75: O-Ring
- 76: Nut
- 77: Nut
- 78: Gewindebohrung
- 79: Dichtung
- 80: Stift
- 81: Wölbung
- 82: Verbindungskanal
- 83: Verbindungskanal
- 84: Verlängerungskanal
- 85: Verlängerungskanal
- 86: Bohrung
- 87: Teilsegment
- 88: Stirnfläche
- 89: Zapfen
- 90: Schlauchanschluß
- 91: Dichtungselement
- 92: Bohrung
- 93: Stufenbohrung
- 94: Rastung
- 95: Zapfen

## Patentansprüche

1. Adaptervorrichtung (1) zur Verbindung eines Pumpensystems (2) mit unterschiedlichen Ventilanschlüssen, mit einem Gehäuse (4), welches eine Eintrittsöffnung (5) für das zu pumpende Medium und mehrere Austrittsöffnungen (7, 8) aufweist, wobei die Austrittsöffnungen wahlweise und einzeln mit der Eintrittsöffnung verbindbar sind und durch ein Dichtungselement (24) gegenüber der Eintrittsöffnung abgedichtet sind,
dadurch gekennzeichnet,
daß das Dichtungselement (24) dreh- und/oder schiebebeweglich innerhalb des Gehäuses (4) gelagert ist und durch eine äußere ringförmige Hülse (12), welche das Gehäuse (4) zumindest teilweise umschließt, bewegbar ist.

2. Adaptervorrichtung nach Anspruch 1,
dadurch gekennzeichnet,
daß das Gehäuse (4) an einem Ende offen gestaltet ist und die Hülse (12) auf das Ende des Gehäuses (4) aufschiebbar ist und dieses verschließt.

3. Adaptervorrichtung nach Anspruch 1,
dadurch gekennzeichnet,
daß die Austrittsöffnungen umfangsverteilt und/oder in Längsrichtung des Gehäuses (4) angeordnet sind.

4. Adaptervorrichtung nach Anspruch 1,
dadurch gekennzeichnet,
daß die Hülse (12) koaxial zum Gehäuse (4) über den einzelnen Austrittsöffnungen angeordnet ist und durch einen Durchbruch (13) maximal eine der Austrittsöffnungen freigibt oder alle verschließt.

5. Adaptervorrichtung nach Anspruch 1,
dadurch gekennzeichnet,
daß das Dichtungselement (24) ringförmig ausgebildet ist und einen Segmentausschnitt (53) aufweist, welcher sich in Axialrichtung über einen Teilbereich des Dichtungselementes (24) erstreckt und einen inneren Verbindungskanal zur Eintrittsöffnung des Gehäuses (4) aufweist.

6. Adaptervorrichtung nach Anspruch 3,
dadurch gekennzeichnet,
daß das Dichtungselement (24) zumindest teilweise doppelwandig ausgebildet ist und eine Tasche bildet, in die ein Segmentringansatz (18) der Hülse (12) eingreift.

7. Adaptervorrichtung nach Anspruch 2 und 5,
dadurch gekennzeichnet,
daß der Durchbruch (13) der Hülse (12) und der Segmentausschnitt (53) des Dichtungselementes (24) nach der Montage deckungsgleich angeordnet sind.

8. Adaptervorrichtung nach einem oder mehreren der Ansprüche 1 - 7,
dadurch gekennzeichnet,
daß die Hülse (12) oder das Gehäuse (4) in der Stirnfläche (16) einen Gewinde- oder Steckanschluß mit einem nach innen geführten Verbindungskanal (21) aufweist, welcher durch eine Abdichtung verschließbar ist.

9. Adaptervorrichtung nach einem oder mehreren der Ansprüche 1 - 8,
dadurch gekennzeichnet,
daß das Dichtungselement (24) einen ringförmigen Kragen (29) an einem Ende und eine zurück gesetzte und teilweise ringförmig durchbrochene Stirnfläche (31) aufweist, wobei auf der Stirnfläche (31) eine äußere elastische Verdickung zur Abdichtung der Anschlußbohrung (20) angeordnet ist.

10. Adaptervorrichtung nach einem oder mehreren der Ansprüche 1 - 9,
dadurch gekennzeichnet,
daß das Gehäuse (4) und die Hülse (12) mit einer Rastung aus einer Nut-Federkombination (11, 52) ausgestattet ist, welche immer dann zum Eingriff kommt, wenn der Durchbruch (13) der Hülse (12) eine Austrittsöffnung freigibt.

11. Adaptervorrichtung nach einem oder mehreren der Ansprüche 1 - 10,
dadurch gekennzeichnet,
daß die Austrittsöffnungen des Gehäuses (4) aus einem Verbindungskanal (8) und einer runden oder eckigen Ausnehmung (7) bestehen, welche zur Aufnahme einer an das jeweilige Dichtungssystem angepaßten Dichtung (25, 26) vorgesehen sind.

12. Adaptervorrichtung nach einem oder mehreren der Ansprüche 1 - 11,
dadurch gekennzeichnet,
daß in einer Raststellung anstelle einer Austrittsöffnung ein Druckknopf (27) zur Verriegelung der Hülse (12) vorgesehen ist.

13. Adaptervorrichtung nach einem oder mehreren der Ansprüche 1 - 12,
dadurch gekennzeichnet,
daß das Gehäuse (4) mindestens eine axiale Längsnut (9) und/oder eine Ringnut (10) aufweist, in welcher mindestens ein Ansatz (14) der Hülse (12) eingreift und geführt ist.

14. Adaptervorrichtung nach einem oder mehreren der Ansprüche 1 - 13,
dadurch gekennzeichnet,
daß der Gewinde- oder Steckanschluß zur Aufnahme eines Balladapters (40), eines Schlauchadapters (41) oder eines Manometers vorgesehen ist.

15. Adaptervorrichtung nach einem oder mehreren der Ansprüche 1 - 14,
dadurch gekennzeichnet,
daß eine der Ausnehmungen (7) zur Aufnahme eines Adapters, beispielsweise eines Ball- (40) oder Schlauchadapters (41) vorgesehen ist, welcher mit einem Steckanschluß oder mehreren Befestigungsnasen (48) in eine Ringnut (54) der Ausnehmung (7) clipartig zur Befestigung einrastet und durch einen O-Ring gegenüber dem Gehäuse (4) abgedichtet ist.

16. Adaptervorrichtung nach Anspruch 14 oder 15,
dadurch gekennzeichnet,
daß der Schlauchadapter (41) am anderen Ende des Schlauches (61) einen Doppelventilanschluß (62) aufweist, welcher durch einen verdrehbaren Regelschalter (63) mit einem Dichtungselement (91) drehfest verbunden ist und die Ventilanschlüsse (64, 65) abdichtet bzw. einzeln öffnet, wobei der Regelschalter (63) von außen verdrehbar ist.

17. Adaptervorrichtung nach Anspruch 16,
dadurch gekennzeichnet,
daß der Regelschalter (63) außen einen Drehkopf und innen ein zylindrisches Teilsegment (87) mit einer hinteren Stirnfläche (88) aufweist, wobei sich das zylindrische Teilsegment (87) über einen Dreiviertelkreis erstreckt und einen nach innen hervorstehenden Zapfen (89) des Schlauchanschlusses (90) aufnimmt.

18. Adaptervorrichtung nach Anspruch 16,
dadurch gekennzeichnet,
daß der Regelschalter (63) eine mittlere Stellung aufweist, in welcher beide Ventilanschlüsse (64, 65) verschlossen sind und daß der Regelschalter (63) zwei weitere Stellungen aufweist, in welcher einer der beiden Ventilanschlüsse (64, 65) mit dem Schlauch (61) über einen Verbindungskanal (82, 83, 84, 85) verbunden ist.

19. Adaptervorrichtung nach Anspruch 16,
dadurch gekennzeichnet,
daß die Ventilanschlüsse (64, 65) drehbar gelagert und durch ein Befestigungsmittel (71), welches in eine Nut (72, 73) der Ventilanschlüsse (64, 65) einrastet, gesichert sind.

## Claims

1. An adapter device (1) for connecting a pump system (2) to various valve connections, with a housing (4) which has an inlet orifice (5) for the medium to be pumped and multiple outlet orifices (7, 8), where the outlet orifices can be connected individually and by choice to the inlet orifice and are sealed with respect to the inlet orifice by a gasket element (24), characterized in that the gasket element (24) is mounted so as to be rotationally and/or displaceably movable within the housing (4) and is movable through an external ring-shaped sleeve (12) which surrounds the housing (4) at least partially.

2. An adapter device according to Claim 1, characterized in that the housing (4) is designed to be open at one end and the sleeve (12) can be pushed onto the end of the housing (4), sealing it.

3. An adapter device according to Claim 1, characterized in that the outlet orifices are arranged so they are distributed in the longitudinal direction of the housing (4) and/or around the circumference.

4. An adapter device according to Claim 1, characterized in that the sleeve (12) is arranged coaxially with the housing (4) through the individual outlet orifices, and through a passage (13) it releases a maximum of one of the outlet orifices or it seals off all of them.

5. An adapter device according to Claim 1, characterized in that the sealing element (24) is designed in a ring shape and has a segment cutout (53) which extends axially over a partial area of the gasket element (24) and has an internal channel to the inlet orifice of the housing (4).

6. An adapter device according to Claim 3, characterized in that the gasket element (24) is designed to be double-walled at least in part and forms a pocket in which a segment ring projection (18) on the sleeve (12) engages.

7. An adapter device according to Claims 2 and 5, characterized in that the passage (13) in the sleeve (12) and the segment cutout (53) in the gasket element (24) are arranged to coincide after assembly.

8. An adapter device according to one or more of Claims 1 through 7, characterized in that the sleeve (12) or the housing (4) has a threaded connection or a plug connection in the end face (16) with a connecting channel (21) that leads inward and can be sealed by a gasket.

9. An adapter device according to one or more of Claims 1 through 8, characterized in that the gasket element (24) has a ring-shaped collar (29) on one end and an end face (31) which is set back and has a partial annular passage, with an outer elastic enlargement being provided on the end face (31) to seal the connecting bore (20).

10. An adapter device according to one or more of Claims 1 through 9, characterized in that the housing (4) and the sleeve (12) are equipped with a locking design in the form of a tongue-and-groove combination (11, 52), which is always engaged when the passage (13) in the sleeve (12) releases an outlet orifice.

11. An adapter device according to one or more of Claims 1 through 10, characterized in that the outlet orifices of the housing (4) consist of a connecting channel (8) and a round or angular recess (7) provided to accommodate a gasket (25, 26) adapted to the respective sealing system.

12. An adapter device according to one or more of Claims 1 through 11, characterized in that instead of an outlet orifice, a pushbutton (27) is provided to lock the sleeve (12) in a locked position.

13. An adapter device according to one or more of Claims 1 through 12, characterized in that the housing (4) has at least one longitudinal axial groove (9) and/or a ring groove (10) in which at least one shoulder (14) of the sleeve (12) engages and is guided.

14. An adapter device according to one or more of Claims 1 through 13, characterized in that the threaded connection or plug connection is provided to accommodate a ball adapter (40), a hose adapter (41) or a manometer.

15. An adapter device according to one or more of Claims 1 through 14, characterized in that one of the recesses (7) is provided (7) to accommodate an adapter, such as a ball adapter (40) or a hose adapter (41) which engages with a plug connector or with multiple fastening projections (48) in a ring groove (54) of the recess (7) like a clip to fasten it and is sealed by an O ring with respect to the housing (4).

16. An adapter device according to Claim 14 or 15,
characterized in that
the hose adapter (41) has a double valve connection (62) on the other end of the hose (61), connected in a rotationally fixed manner to a gasket element (91) by a regulating switch (63) that can be turned and it seals the valve connections (64, 65) or opens them individually, with the regulating switch (63) being turnable from the outside.

17. An adapter device according to Claim 16, characterized in that the regulating switch (63) has a turning head on the outside and a cylindrical subsegment (87) on the inside with a rear end face (88), with the cylindrical subsegment (87) extending over three-quarters of a segment and accommodating a journal pin (89) of the hose connection (90) extending inward.

18. An adapter device according to Claim 16, characterized in that the regulating switch (63) has a middle position in which both valve connections (64, 65) are closed, and the regulating switch (63) has two other positions in which one of the two valve connections (64, 65) is connected to the hose (61) by a connecting channel (82, 83, 84, 85).

19. An adapter device according to Claim 16, characterized in that the valve connections (64, 65) are mounted so they can rotate and are secured by a fastening means (71) which engage in a groove (72, 73) in the valve connections (64, 65).

## Revendications

1. Dispositif d'adaptation (1) pour raccordement d'un système de pompage (2) comprenant différents raccords de soupapes, à un boîtier (4) présentant un orifice d'entrée (5) pour le fluide à pomper et plusieurs orifices de sortie (7, 8), dispositif d'adaptation dans lequel les orifices de sortie peuvent être mis en relation optionnellement et individuellement avec l'orifice d'entrée et sont étanchés par rapport à l'orifice d'entrée au moyen d'un élément d'étanchéité (24), caractérisé en ce que l'élément d'étanchéité (24) est logé de façon à pouvoir tourner et/ou coulisser à l'intérieur du boîtier (4) et peut être mis en mouvement par une douille annulaire extérieure (12) qui enveloppe, au moins partiellement, le boîtier (4).

2. Dispositif d'adaptation selon la revendication 1, caractérisé en ce que le boîtier (4) est ouvert à une extrémité et en ce que la douille (12) peut être enfilée sur ladite extrémité du boîtier (4) et obture cette dernière.

3. Dispositif d'adaptation selon la revendication 1, caractérisé en ce que les orifices de sortie sont répartis à la périphérie et/ou disposés dans la direction longitudinale du boîtier (4).

4. Dispositif selon la revendication 1, caractérisé en ce que la douille (12) est disposée coaxialement au boîtier (4) au-dessus des orifices de sortie individuels et dégage un des orifices de sortie, au maximum, au travers d'un percement (13), ou les obture tous.

5. Dispositif d'adaptation selon la revendication 1, caractérisé en ce que l'élément d'étanchéité (24) est réalisé sous forme annulaire et présente une découpure en forme de segment (53) qui s'étend dans le sens axial sur une zone partielle de l'élément d'étanchéité (24) et présente un canal de liaison interne vers l'orifice d'entrée du boîtier (4).

6. Dispositif d'adaptation selon la revendication 3, caractérisé en ce l'élément d'étanchéité (24) est à double paroi, au moins en partie, et forme une poche dans laquelle s'engage un rebord en forme de segment annulaire (18) de la douille (12).

7. Dispositif d'adaptation selon les revendications 2 et 5, caractérisé en ce que le percement (13) de la douille (12) et la découpure en forme de segment (53) de l'élément d'étanchéité (24) sont placés en coïncidence après le montage.

8. Dispositif d'adaptation selon l'une ou plusieurs des revendications 1-7, caractérisé en ce que la douille (12) ou le boîtier (4) présente, dans la face frontale (16), un raccord fileté ou à emboîter comprenant un canal de liaison (21) dirigé vers l'intérieur.

9. Dispositif d'adaptation selon l'une ou plusieurs des revendications 1-8, caractérisé en ce que l'élément d'étanchéité (24) présente un rebord annulaire (29) à une extrémité et une face frontale (31) en retrait et percée partiellement en forme de cercle, une surépaisseur extérieure élastique étant prévue en vue d'étancher l'alésage de raccordement (20).

10. Dispositif d'adaptation selon l'une ou plusieurs des revendications 1-9, caractérisé en ce que le boîtier (4) et la douille (12) sont équipés d'un système de crantage constitué d'une combinaison de rainure et languette (11, 52), qui vient toujours en prise lorsque le percement (13) de la douille (12) dégage un orifice de sortie.

11. Dispositif d'adaptation selon l'une ou plusieurs des revendications 1-10, caractérisé en ce que les orifices de sortie du boitier (4) consistent en un canal de liaison (8) et en un évidement (7) rond ou angulaire qui sont prévus en vue du logement d'une garniture d'étanchéité (25, 26) adaptée au système d'étanchéité concerné.

12. Dispositif d'adaptation selon l'une ou plusieurs des revendications 1-11, caractérisé en ce que dans une position de crantage, un bouton-poussoir (27) est prévu pour le verrouillage de la douille (12).

13. Dispositif d'adaptation selon l'une ou plusieurs des revendications 1-12, caractérisé en ce que le boîtier (4) présente au moins une rainure longitudinale (9) et/ou une rainure annulaire (10) dans laquelle s'engage et est guidé au moins un rebord (14) de la douille (12).

14. Dispositif d'adaptation selon l'une ou plusieurs des revendications 1-13, caractérisé en ce que le raccord fileté ou à emboîtement est prévu pour loger un adaptateur à balle (40), un adaptateur à tuyau flexible (41) ou un manomètre.

15. Dispositif d'adaptation selon l'une ou plusieurs des revendications 1-14, caractérisé en ce qu'un des évidements (7) est prévu pour loger un adaptateur, par exemple un adaptateur à balle (40) ou à tuyau flexible (41), qui s'engage par clipsage, avec un raccord à emboîtement ou plusieurs ergots de fixation (48), dans une rainure annulaire (54) de l'évidement (7), à des fins de fixation, et qui est étanché par rapport au boitier (4) au moyen d'un anneau torique.

16. Dispositif d'adaptation selon la revendication 14 ou 15, caractérisé en ce que l'adaptateur à tuyau flexible (41) présente, a l'autre extrémité du flexible (61), un double raccord à soupapes (62) qui est raccordé avec résistance à la torsion, à un élément d'étanchéité (91), par l'intermédiaire d'un combinateur tournant (63), et qui obture les raccords à soupape (64, 65) et les ouvre individuellement, le combinateur (63) pouvant être mis en rotation de l'extérieur.

17. Dispositif d'adaptation selon la revendication 16, caractérisé en ce que le combinateur (63) présente, extérieurement, une tête tournante et, intérieurement, un segment partiel cylindrique (87) pourvu d'une face frontale arrière (88), ledit segment partiel cylindrique (87) s'étendant sur trois quarts de cercle et réceptionnant un téton (89) du raccord à tuyau flexible (90) s'avançant vers l'intérieur.

18. Dispositif d'adaptation selon la revendication 16, caractérisé en ce que le combinateur (63) présente une position médiane dans laquelle les deux raccords à soupape (64, 65) sont obturés, et en ce que le combinateur (63) présente deux autres positions, dans une desquelles l'un des deux raccords à soupape (64, 65) est en relation avec le flexible (61), par l'intermédiaire d'un canal de liaison (82, 83, 84, 85).

19. Dispositif d'adaptation selon la revendication 16, caractérisé en ce que les raccords à soupape (64, 65) sont montés avec une aptitude de rotation et sont bloqués par un moyen de fixation (71) qui s'engage dans une rainure (72, 73) des raccords à soupape (64, 65).
